# DEMANDE DE BREVET EUROPEEN

(11) **EP 0 923 858 A1**
(43) Date de publication de la demande: **23.06.1999**
(21) Numéro de dépôt: 98390017.6
(22) Date de dépôt: 16.12.1998
(51) Int. Cl.: A01K 1/12

(54) **Equipement de salle de traité des animaux et notamment des ovins ou des caprins**

(30) Priorité: 17.12.1997 FR 9715987
(71) Demandeur: Etablissements André Roux, 12410 Salles Curan (FR)
(72) Inventeur: Roux, André, 12410 Salles Curan (FR)
(74) Mandataire: Ravina, Bernard

(57) **Abrégé**

La présente invention concerne un équipement de salle de traite des animaux et notamment des ovins permettant de les obliger à se positionner devant une mangeoire, de les bloquer en position et de les équiper d'un gobelet trayeur relié à une machine à traire.

L'équipement selon l'invention est constitué par une enceinte longitudinale (1) délimitée sur un grand côté par le vide ou une barrière et de l'autre grand côté par une rangée de mangeoires (2) et de stalles (3) dans lesquelles se placent les animaux, les dites stalles étant dotées chacune d'un cornadis (4) de contention et à chaque extrémité par une porte d'entrée (7) et de sortie (8) transversale ; les stalles sont dotées de moyens d'obturation ou d'ouverture permettant aux animaux de se positionner avec la tête dans la mangeoire à travers le cornadis au fur et à mesure de l'ouverture de chaque stalle, caractérisé en ce que la porte transversale d'entrée (7) étant normalement ouverte ; une barrière (9) transversale à l'enceinte portée par un chariot (10) mobile se déplace suivant l'axe longitudinal au fur et à mesure de la fermeture des stalles, les animaux entrants n'ayant pas accès aux mangeoires et que la porte transversale de sortie (8) étant fermée ; la barrière (9) est escamotée pendant son retour vers sa position de départ au cours duquel s'effectue l'ouverture des stalles.

## Description

La présente invention concerne un équipement de salle de traite des animaux et notamment des ovins.
De tels équipements connus associent une rangée de mangeoires devant laquelle se placent les animaux avec cornadis de contention et un appareil de traite, les animaux étant équipés, après leur positionnement devant les mangeoires, de gobelets trayeurs par un préposé.

De tels équipements sont, soit sur un quai surélevé, soit parallèles à une fosse dans laquelle se tient le préposé qui est ainsi à hauteur de travail satisfaisante.

Il est apparu nécessaire de doter ces équipements de moyens permettant de contrôler le positionnement des animaux et de rationaliser le fonctionnement des équipements en sorte qu'il n'y ait pas de temps mort dans leur utilisation, ce qui allonge considérablement le temps de traite, le nombre de places ou stalles de l'équipement devant la rangée de mangeoires étant détenniné et limité et le nombre d'animaux à traire pouvant être très important.

Certains équipements connus comportent des stalles mobiles disposées sur une rangée qui peuvent une fois qu'un animal y a pris place être tiré transversalement vers la fosse en sorte que l'animal soit à porté du préposé.

D'autres équipements tel que celui décrit dans le brevet français n° 78.12863 sont conçus avec des stalles en rangées montées sur des dispositifs transporteurs à mouvement longitudinal par rapport à la fosse, ces mouvements pouvant être alternatifs.
Il apparaît que ces équipements demandent une place importante sur le site d'exploitation et que leur utilisation ne peut se faire en continu.
Il a été également réalisé des équipements comportant une rangée de stalles avec mangeoires dotées de moyens de fermeture et ouverture escamotable en sorte que les animaux se placent l'un après l'autre dans une stalle ouverte.

Ces équipements permettent de faciliter la mise en place des animaux et la pose des gobelets trayeurs.
Ils ne donnent cependant pas satisfaction dans la mesure où ils fonctionnent en deux temps :
- un temps de mise en place des animaux et de traite ;
- un temps d'évacuation des animaux.

En outre, ces équipements connus utilisent des moyens d'ouverture/ fenneture des stalles du type rideau défilant devant les stalles qui, quelle que soit leur conception, prennent une place importante par utilisation d'un tambour enrouleur à côté de l'installation ou d'un caisson dans lequel le rideau se replie en accordéon.

Certains équipements ont essayé de remédier à cet inconvénient en réalisant un rideau qui passe devant puis derrière les stalles, mais dans ce cas, lorsque les animaux ont leur tête bloquée dans le cornadis de leur stalle, ils ne sont plus accessibles à ce niveau, ce qui peut empêcher d'effectuer certaines opérations par exemple à usage vétérinaire.

Un autre inconvénient des systèmes à rideau défilant est leur grande complexité et la fragilité du rideau, élément qui doit être soutenu sur une grande longueur et qui doit résister à la poussée des animaux.

La présente invention vise à obvier à ces inconvénients en réalisant un équipement de salle de traite pour animaux, notamment les ovins, du type comprenant une rangée de mangeoires devant laquelle se placent les animaux à des places définies par des cornadis de contention, les animaux en place étant équipés de gobelets trayeurs, le dit équipement permettant un traitement plus rapide des animaux et présentant en outre l'avantage d'un moindre encombrement sur le site de traite.

A cet effet, l'équipement de salle de traite, selon l'invention, est constitué par une enceinte longitudinale délimitée sur un grand côté par le vide ou une barrière et sur l'autre grand côté par une rangée de mangeoires et de stalles dans lesquelles se placent les animaux, les dites stalles étant dotées chacune d'un cornadis de contention, et à chaque extrémité par une porte d'entrée et de sortie transversale ; les stalles sont dotées de moyens d'obturation et d'ouverture, permettant aux animaux de se positionner avec la tête dans la mangeoire à travers le cornadis au fur et à mesure de l'ouverture de chaque stalle, caractérisé en ce que la porte transversale d'entrée étant normalement ouverte, une barrière transversale à l'enceinte portée par un chariot mobile, se déplace suivant l'axe longitudinal de l'enceinte au fur et à mesure de la fermeture des stalles, les animaux déjà en place étant libérés, la porte transversale de sortie étant ouverte, et les animaux entrants n'ayant pas accès aux mangeoires et lorsque toutes les stalles sont fermées, la porte transversale de sortie étant alors fermée, la barrière mobile est escamotée pendant son retour vers la position de départ au cours duquel s'effectue l'ouverture des stalles, la barrière transversale se dépliant pour empêcher l'entrée d'autres animaux.

Cette disposition de l'invention pennet de faire rentrer des animaux à mesure que ceux qui les ont précédés, qui ont été traits et se sont nourris, sont évacués. De ce fait, il n'est plus nécessaire d'attendre que l'enceinte soit complètement évacuée pour faire rentrer des animaux.

Suivant une autre caractéristique de l'invention, les cornadis sont du type autoblocant par introduction de la tête d'un animal et à déblocage simultané pour toute la rangée, ce qui facilite la libération des animaux au fur et à mesure de la fermeture des stalles.

Suivant encore une autre caractéristique de l'invention, les moyens d'obturation et d'ouverture de chaque stalle sont constitués de deux volets verticaux mobiles par pivotement autour d'un axe vertical, chacun des axes respectifs délimitant les côtés de chacune des stalles, les volets étant écartés et parallèles en position d'ouverture en délimitant les stalles et dans le prolongement l'un de l'autre en position de fermeture.

Suivant une autre caractéristique de l'invention, deux volets, un pour chaque stalle adjacente, sont portés par un axe vertical et commandés par un même dispositif en ouverture et fermeture, chacun des volets ouvrant ou fennant une moitié de stalle et constituant séparation avec la stalle voisine lorsqu'il est en position d'ouverture.
Cette disposition de l'invention permet de délimiter les stalles en séparant les animaux pendant qu'ils se nourrissent et également de fermer les stalles et l'accès à la mangeoire sans utiliser de pièces fragiles et de grandes dimensions, ce qui donne une installation particulièrement solide.

D'autres avantages et caractéristiques de l'invention apparaîtront à la lecture de la description ci-après, d'une forme de réalisation donnée à titre d'exemple non limitatif et illustré par les dessins joints,dans lesquels :
- les figures 1, 2 et 3 sont des vues en plan de l'équipement selon l'invention,
- la figure 4A, 4B sont des vues de la commande d'ouverture/fermeture des volets selon une première forme de réalisation,
- la figure 4C est une vue de la commande d'ouverture/fermeture des volets selon une autre forme de réalisation,
- les figures 5 et 6 sont des vues du cornadis fermé et ouvert,
- les figures 7 et 8 sont des vues de la barrière mobile escamotables.

Tel que représenté aux dessins annexés, l'équipement des stalles de traite des animaux, et notamment des ovins et des caprins selon l'invention permettant de les obliger à se positionner devant une mangeoire, de les bloquer en position et de les équiper de gobelets trayeurs reliés à une machine à traire est constitué par une enceinte longitudinale 1.

Cette enceinte peut être un quai surélevé oû elle peut être réalisée en bordure d'une fosse délimitant un de ses grands côtés.

Dans ces deux cas de réalisation, l'enceinte 1 est délimitée sur un de ses grands côtés par le vide.

Dans ces deux cas de réalisation, soit que l'enceinte soit surélevée, soit qu'elle longe une fosse : le préposé chargé de la mise en place des gobelets trayeurs et de leur enlèvement sera à hauteur convenable pour travailler.

L'autre grand côté de l'enceinte 1 longitudinale est délimité par une rangée de mangeoires alignées 2 et de stalles 3 ou emplacement des animaux.

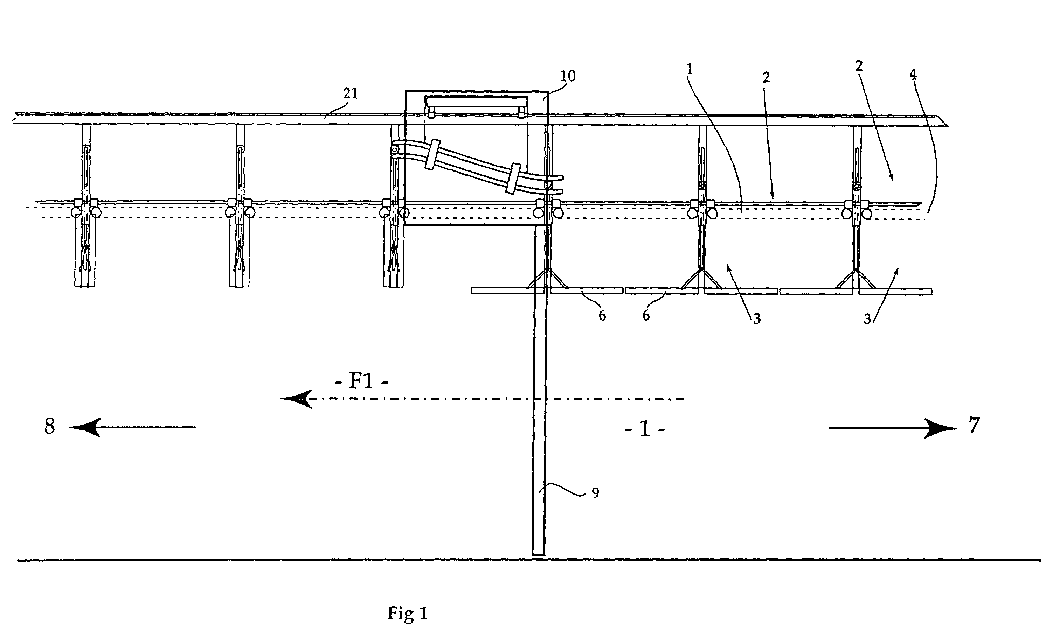

Les stalles 3 sont dotées chacune d'un cornadis 4 de contention des animaux, schématisées à la figure 1 et décrits plus loin.

Ces cornadis sont du type autobloquant par appui de la tête ou de l'encolure de l'animal lorsqu'il se penche vers la mangeoire. L'ensemble des cornadis de la rangée est doté d'un organe d'ouverture simultané.

Les stalles 3 sont dotées de moyens d'obturation et d'ouverture permettant soit d'empêcher l'accès des animaux aux mangeoires, soit de l'autoriser. Ces moyens sont placés à l'avant des cornadis.

Selon une des caractéristiques de l'invention, ces moyens d'obturation ou d'ouverture font également fonction, en position d'ouverture, de délimitation des stalles et de séparation entre les animaux.

Les moyens d'obturation sont constitués par des volets mobiles (6) suivant un axe vertical.

Un volet rotatif sur un axe vertical peut obturer l'accès à un cornadis et à la mangeoire ou le libérer.
Il peut y avoir un volet par stalle et cornadis avec un axe vertical latéral au cornadis.

En position de fermeture, les volets de chaque stalle ou cornadis sont donc dans le prolongement l'un de l'autre suivant l'axe ou parallèlement à l'axe d'alignement des mangeoires et des cornadis.

En position d'ouverture, les volets sont parallèles entre eux et perpendiculaires ou transversaux à l'axe d'alignement des mangeoires et des cornadis.
Dans cette position, les volets mobiles délimitent les stalles et font séparation entre les animaux.

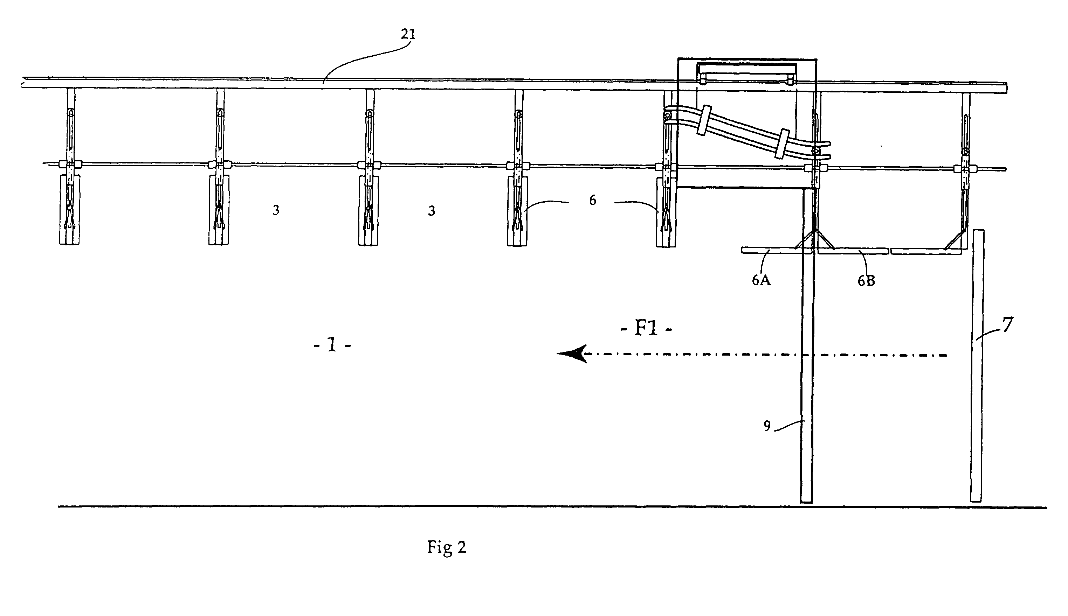

Avantageusement, les moyens d'obturation et d'ouverture de chaque stalle sont constitués de deux volets 6 verticaux mobiles par pivotement autour d'un axe vertical; chacun des volets est articulé sur un axe latéral à la stalle et occupe en position de fenneture la moitié de l'espace d'accès au cornadis et à la mangeoire.
Pour chaque stalle adjacente sont montés deux volets mobiles 6, un 6A pour une des stalles et un 6B pour l'autre stalle (Figure 2).

Les deux volets articulés verticalement sont commandés en ouverture et fenneture par un dispositif commun.

L'enceinte 1 longitudinale est organisée avec un sens de circulation ; les animaux arrivent par une entrée qui peut être obturée par une porte d'entrée 7 à fenneture et ouverture commandée (Figure 2).

La porte d'entrée 7 est normalement ouverte en cycle de fonctionnement et sert essentiellement à interdire l'accès de l'enceinte hors du cycle de fonctionnement par exemple lorsque l'installation est à l'arrêt.

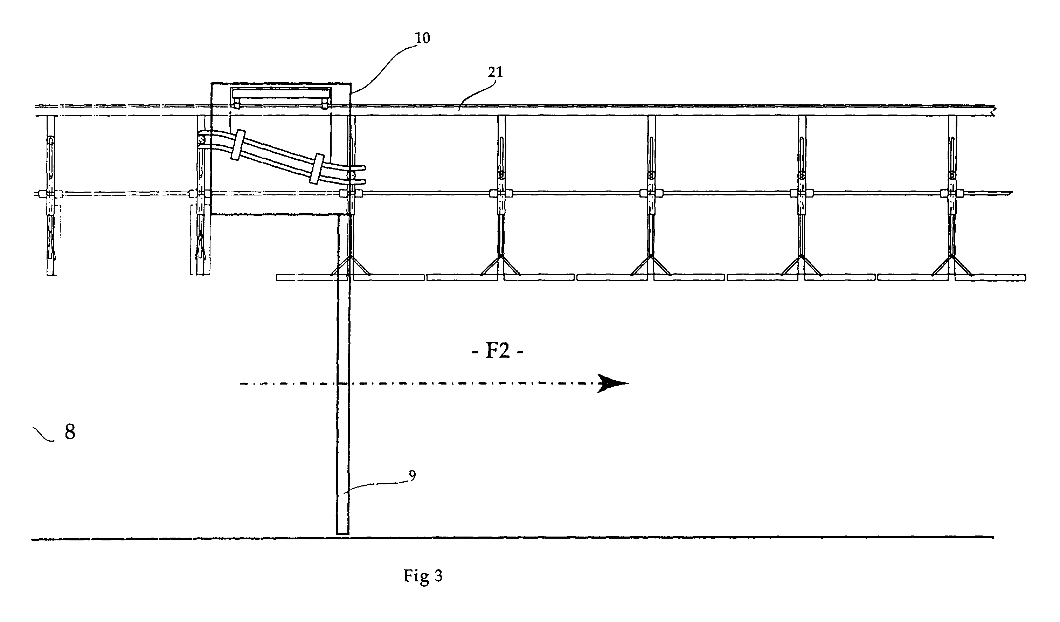

Les animaux sortent par une porte 8 de sortie à l'autre extrêmité (Figure 3) ; cette porte de sortie est à ouverture et fermeture commandée. La fermeture ou l'ouverture des portes peut être commandée par tous moyens connus, tels que vérins ou contrepoids, lesdits moyens étant commandés à partir d'une centrale.

Suivant l'invention, une barrière 9 escamotable transversale à l'enceinte se déplace suivant l'axe longitudinal de ladite enceinte depuis l'entrée 7 jusqu'à la sortie 8 en poussant les animaux.

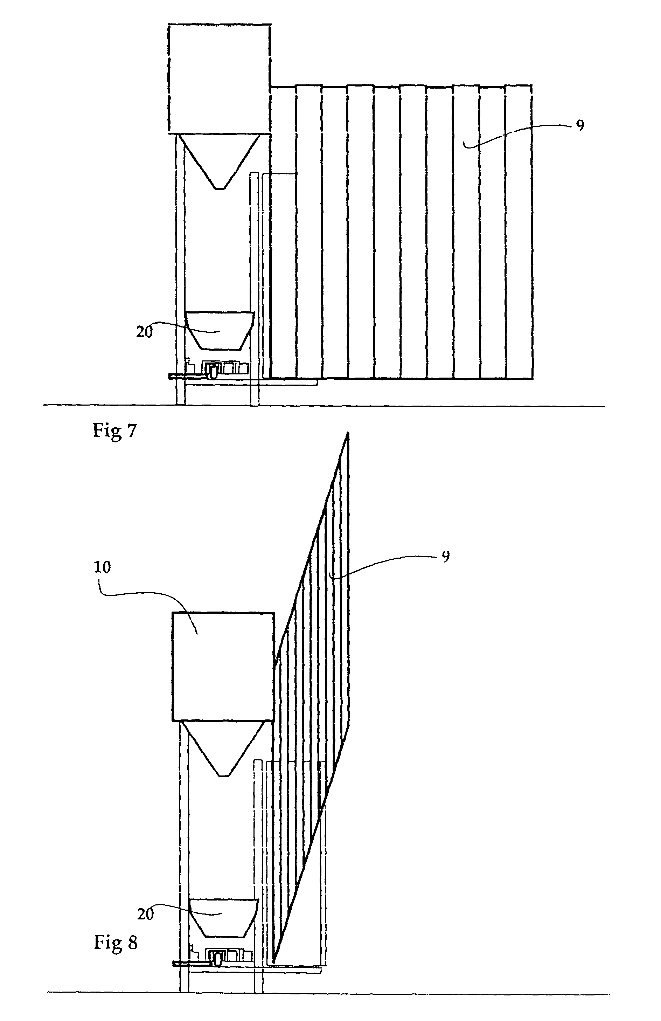

Simultanément au déplacement depuis l'entrée vers la sortie de la barrière escamotable, les stalles 3 se ferment. La barrière 9 est ensuite relevée et se replie en s'escamotant vers le haut pendant son trajet en sens inverse depuis la porte de sortie 8 jusqu'à la porte d'entrée 7, comme représenté aux figures 7/8.

Au cours de ce déplacement, les volets des stalles sont ouverts, ce qui pennet aux animaux d'accéder à la nourriture en prenant chacun place dans le cornadis qui le maintient en position.

Avantageusement, la barrière transversale 9 mobile est constituée par un parallèlogramme déformable de façon à être capable de se replier ; elle est portée par un chariot 10 mobile sur un rail disposé au-dessus de la rangée des stalles. Le chariot mobile, dont les déplacements sont commandés par une centrale, peut être associé à une trémie distributrice de l'aliment dans la rangée de mangeoires et qui est mobile avec le chariot. Le chariot est équipé d'un moteur électrique avec organe de roulement sur le rail de type connu.

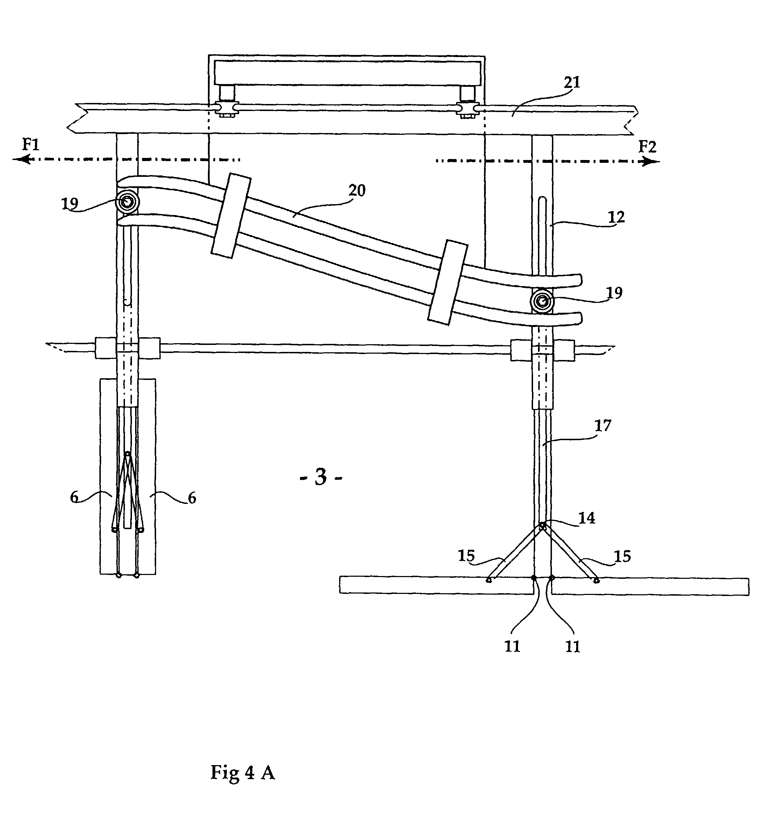

Les volets 6 d'ouverture ou d'obturation des stalles (figure 4A) sont montés deux par deux, un pour chaque stalle.

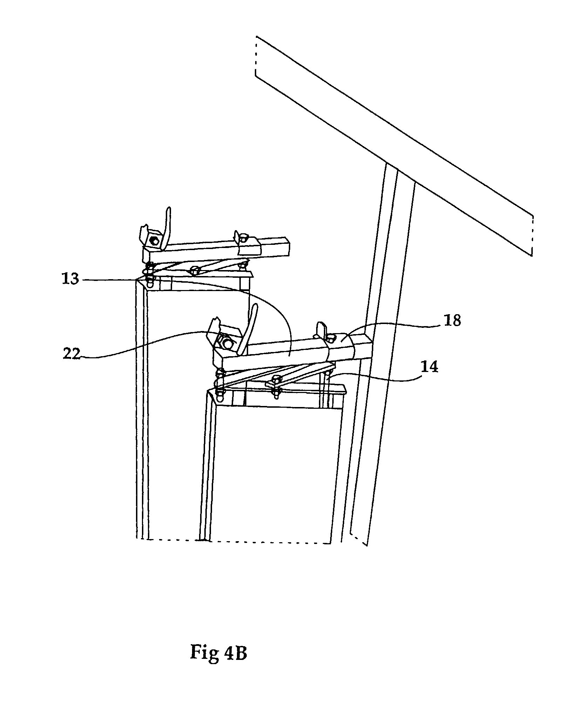

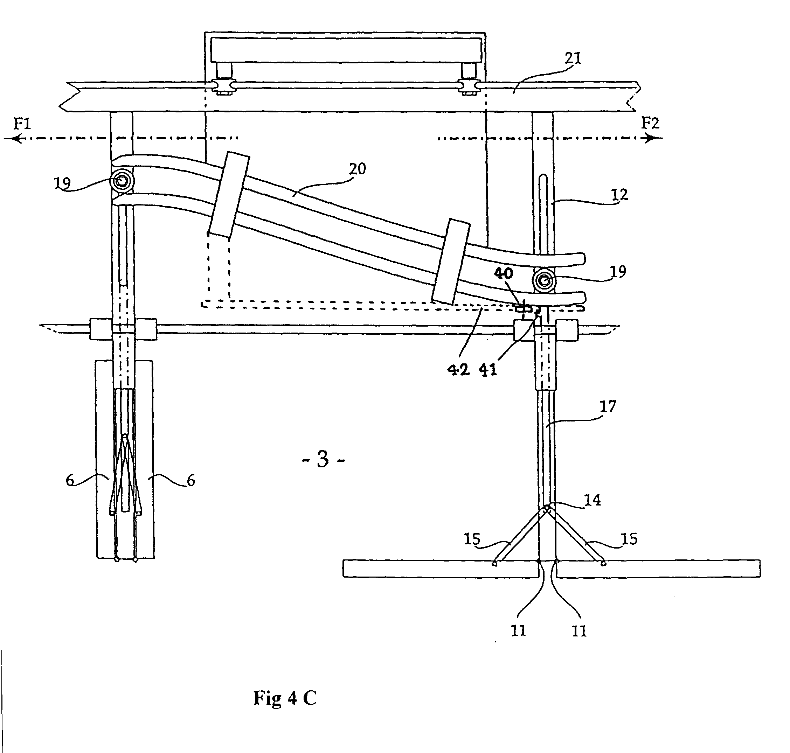

Comme représenté aux dessins, et notamment aux figures 4, chaque groupe de deux volets 6, un pour chaque stalle, est commandé par un même actionneur.
Chacun des volets est monté selon un axe vertical 11.

Les axes verticaux 11 parallèles de deux volets d'un même groupe sont montés sur une traverse basse 12 et une traverse haute 13 ; ces traverses 12/13 sont perpendiculaires à l'axe de l'alignement des stalles et mangeoires.

La traverse basse 12 est représentée en figure 4A ; la traverse haute 13 est représentée en figure 4B.

Selon une première forme de réalisation représentée sur les figures 4A et 4B, un axe vertical 14 est monté entre les traverses hautes 13 et les traverses basses 12.

L'axe vertical est relié par deux biellettes inférieures 15 (figure 4A) et supérieures 16 aux volets, chaque groupe de biellettes 15/16 étant affecté à un des volets 6.

La traverse basse 12 et la traverse haute 13 forment des coulisses superposées 17 entre lesquelles est mobile l'axe 14 vertical porté par une chape 18 (figure 4B) supérieure qui coulisse sur la traverse haute 13 et par une barre mobile formant coulisseau ou poussoir dans la traverse 12 basse (figure 4A).

A extrémité de la barre formant poussoir est monté un galet rotatif 19. Les poussoirs et la came 20 sont sous la rangée de mangeoires.

Suivant que le galet rotatif 19 est en position arrière ou avant, l'avant étant l'alignement des stalles 3, les volets 6 sont fermés et parallèles entre eux ou ils sont déployés et dans l'alignement l'un de l'autre.

Les galets 19 sont commandés par une came 20 constituée de deux rails parallèles en S entre lesquels passe le galet 19 portée sur un rail 21 parallèle à l'axe de l'enceinte.

Une des extrémités de la came 20 est éloignée du rail 21, l'autre extrémité est rapprochée du rail 21.

La came 20 est reliée au chariot mobile 10 et se déplace avec lui. Le déplacement de la came est en figure 4A schématisé par les flèches F1 et F2.

Dans le sens F1, les galets 19 passent de l'arrière vers l'avant, ce qui commande le déploiement et la fermeture des volets 6 qui obturent la stalle 3 et l'accès aux mangeoires et à la nourriture.

Dans le sens F2, les galets 19 passent de l'avant à l'arrière, ce qui commande l'ouverture des volets 6 qui libèrent l'accès à la stalle, délimitée par les volets 6 repliés parallèlement et l'accès à la nourriture.

Le sens F1 est le sens de déplacement du chariot mobile 10 sur l'enceinte 1 depuis l'entrée 7 vers la sortie 8, déplacement au cours duquel la barrière 9 est déployée et empêche les animaux d'occuper la totalité de l'enceinte avant son arrivée en fin de course et pousse les animaux qui ont été nourris vers la sortie.

Le sens F2 est le sens de déplacement du chariot mobile 10 sur l'enceinte 1 depuis la sortie 8 vers l'entrée 7, déplacement au cours duquel la barrière escamotable 9 est relevée et repliée au dessus des animaux qui, au fur et à mesure de l'ouverture des volets, ont accès à la nourriture.

Le relèvement et le repliement de la barrière escamotable 9 peuvent être obtenus par tout moyen connu, tel qu'un vérin ou un système de câble de traction.

Comme représenté en figure 4B sur la traverse haute 13, est monté un verrou articulé 22 commandé par une came non représentée du chariot mobile 10. Le verrou 22 s'engage lorsque les volets viennent en position de fermeture avec un ergot de la chape 18, ce qui assure un blocage des dits volets 6 dans la position de fermeture.

Lors du déplacement en sens inverse du chariot 10, celui-ci va libérer le verrou 22 de chaque groupe de deux volets 6 et pennettre leur repliement.

Selon un autre mode de réalisation simplifié représenté sur la figure 4C, les biellettes hautes 16, le verrou 22, la chape 18 et l'axe 14 sont supprimés et la commande des volets est uniquement assurée par le bas. Il est nécessaire à cet effet que les volets soient suffisamment rigides pour résister aux contraintes engendrées par les animaux. Ils peuvent par exemple être réalisés en tôle d'acier inoxydable. Le blocage des volets initialement assuré par le verrou 22 peut alors être assuré par un loquet 40 agissant directement sur la coulisse 17 sur laquelle sera disposé un taquet 41 par exemple. Le taquet 41 sera disposé sur la coulisse 17 de manière à assurer un blocage par le loquet 40 lorsque les volets sont en position fermée. Les volets seront libérés par une butée 42 fixée à la came 20 agissant sur le loquet 40 et dégageant le taquet 41 de celui-ci.

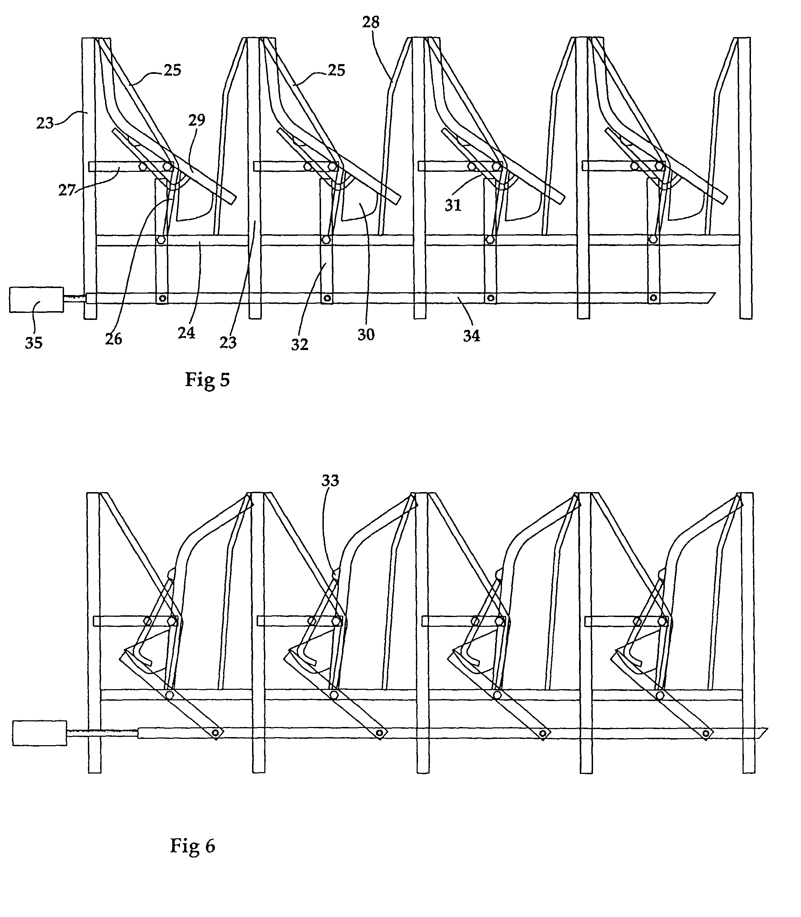

La rangée de cornadis de contention des animaux est disposée comme schématisé en 4, figure 1, entre la position occupée par extrémité des volets 6 repliés en position d'ouverture et la rangée de mangeoires 3.
Chaque cornadis (figures 5-6) présente une partie fixe faisant obstacle partiel au passage de la tête de l'animal et une partie basculante, qui en position ouverte (figure 5), permet le passage de la tête de l'animal et en position fermée (figure 6) bloque l'animal en position.

Chaque cornadis comprend deux potelets 23 verticaux dont l'écartement est équivalent à la largeur de la stalle 3; certains de ces potelets plus hauts que les autres servent de supports au rail horizontal sur lequel se déplace le chariot mobile 10.

Les potelets 23 sont réunis par une traverse 24. Le sommet de l'un des potelets est relié à la traverse 24 à proximité de son milieu par une tige soudée dont une partie supérieure 25 est inclinée et dont l'autre partie 26 est verticale.

Les parties 25/26 forment un angle obtus.

Une entretoise horizontale 27 ferme l'espace entre la tige 25/26 et le potelet 23.
Les composants sus évoqués 25/26/27 forment la partie fixe du cornadis.

L'ouverture potentielle du cornadis entre la tige 25/26 et l'autre potelet 23, adjacente à celui sur lequel est fixée la tige 25/26 est limitée par une tige 28.
Cette ouverture peut être de dimensions variables en fonction de l'animal qui doit y passer la tête et l'encolure.

Sur l'entretoise 27 au voisinage de sa jonction avec l'angle de la tige 25/26 est monté, avec un pivot formant une articulation, un tube 29 présentant une portion supérieure coudée et une portion inférieure rectiligne.

Le tube 29 est fixé par le pivot sur sa partie inférieure rectiligne sensiblement au milieu de celle-ci et au tiers de sa longueur totale.

La partie coudée est orientée en sorte que, dans une position, elle vienne en appui contre l'un des potelets 23, et que, dans ce cas, sa partie rectiligne soit en position transversale inclinée entre l'angle de la tige 25/26 et la tige 28.

A sa partie opposée à la partie coudée est fixée une tôle 30 faisant contrepoids et obstacle au passage de la tête de l'animal entre le tube 29 et la traverse 24.

En figure 5, les cornadis sont représentés ouverts. L'animal peut passer l'encolure entre les tiges 25/28 et pour atteindre la mangeoire, il appuie sur extrémité du tube 29, au-dessus de la tôle 30, en faisant basculer le tube 29 autour de son pivot, ce qui lui fait occuper la position représentée à la figure 6 dans laquelle son extrémité, au-delà du coude, vient en appui sur le potelet adjacent 23.
Dans cette position, l'encolure de l'animal est bloquée.

Sur l'entretoise 27 est montée rotative, dans le même plan que le tube 29, sur une fixation formant pivot, une patte 31.

La patte 31 est montée sur un pivot porté par l'entretoise 27. Elle présente une partie supérieure rectiligne et une partie inférieure coudée. La patte est au repos dans la position du cornadis ouvert (figure 5) en appui sur un axe ou une butée non représenté d'un levier pivotant 32 qui est en position verticale.

Lors de l'appui de l'animal sur le tube 29 qui entraîne le basculement de celui-ci, la patte 31 bascule dans le même plan et se bloque contre une butée 33 du dos dudit tube; ce basculement a pour effet de repousser vers l'arrière le levier 32 (figure 5). Chacun des leviers 32 de chacun des cornadis est relié à une barre horizontale 34 mobile d'avant en arrière et actionnable sous l'action d'un vérin 35.

Lorsque les animaux doivent être libérés au terme du cycle de traite, le vérin 35 commandé par la centrale exerce une traction sur la barre 34 ; chaque levier 32 pousse extrémité inférieure coudée de la patte 31 en avant, ce qui a pour effet de dégager extrémité supérieure de la patte de la butée 33 et permet au tube 29 de basculer en arrière pour occuper la position de la figure 5.

La fenneture des cornadis s'effectue un par un et leur ouverture s'effectue de manière simultanée.

## Revendications

1. Equipement de salle de traite des animaux et notamment des ovins constitué par une enceinte longitudinale (1) limitée sur un côté par le vide et sur l'autre de ses côtés par une rangée de mangeoires (2) et de stalles (3) dans lesquelles se placent les animaux, les dites stalles étant dotées chacune d'un cornadis (4) de contention et à chaque extrémité par une porte d'entrée et de sortie transversale ; les stalles sont dotées de moyens d'obturation ou d'ouverture permettant aux animaux de se positionner avec la tête dans la mangeoire au fur et à mesure de l'ouverture de chaque stalle, caractérisé en ce que la porte d'entrée (7) étant normalement ouverte, une barrière (9) transversale à l'enceinte se déplace sur un chariot (10) mobile au fur et à mesure de la fermeture des stalles (3), les animaux entrants n'ayant pas accès aux mangeoires et que la porte (8) de sortie étant fermée, ladite barrière (9) est escamotée pendant son retour vers sa position de départ au cours duquel s'effectue l'ouverture des stalles.

2. Equipement de salle de traite pour animaux selon la revendication 1 caractérisé en ce que les moyens d'obturation ou d'ouverture de chaque stalle sont constitués de deux volets (6) verticaux mobiles par pivotement autour d'un axe vertical, chacun des axes et des volets respectifs délimitant les côtés de chacune des stalles, les volets étant écartés et parallèles en position d'ouverture et rapprochés et dans le prolongement l'un de l'autre en position de fermeture.

3. Equipement de salle de traite pour animaux selon les revendications 1 et 2 caractérisé en ce que deux volets (6), un pour chaque stalle adjacente, sont portés chacun par un axe vertical, lesdits axes étant adjacents et sont commandés par un même dispositif en ouverture/fermeture.

4. Equipement de salle de traite pour animaux selon la revendication 3 caractérisé en ce que le dispositif d'ouverture/fenneture de deux volets (6) portés suivant deux axes verticaux adjacents est un poussoir horizontal portant un galet (19) coopérant avec une came mobile (20) le long de la rangée de stalle qui actionne en avant (ouverture) ou en arrière (fermeture) successivement chacun des poussoirs.

5. Equipement de salle de traite des animaux selon les revendications 1 et 4 caractérisé en ce que les poussoirs et la came mobile (20) sont disposés sous la rangée des mangeoires (2).

6. Equipement de salle de traite selon la revendication 1 caractérisé en ce que les volets (6) sont bloqués en position de fermeture par un verrou (22) ou un loquet (40).

7. Equipement de salle de traite selon la revendication 1 et la revendication 2, caractérisé en ce que les volets (6) en position d'ouverture délimitent les stalles (3) et séparent les animaux.

8. Equipement de salle de traite selon la revendication 1, caractérisé en ce que la fenneture des cornadis (4) s'effectue sous la poussée des animaux et que leur ouverture est simultanée.
